# EUROPÄISCHE PATENTSCHRIFT

(11) **EP 0 716 491 B1**
(45) Veröffentlichungstag und Bekanntmachung des Hinweises auf die Patenterteilung: **01.04.1998**
(21) Anmeldenummer: 95250291.2
(22) Anmeldetag: 24.11.1995
(51) Int. Cl.: H02H 3/00, G05B 19/12

(54) **Elektronischer Auslöser mit einem Mikroprozessor**
Electronic trip device with a microprocessor
Déclencheur électronique comportant un microprocesseur

(30) Priorität: 05.12.1994 DE 4445079
(43) Veröffentlichungstag der Anmeldung: 12.06.1996
(73) Patentinhaber: SIEMENS AKTIENGESELLSCHAFT, 80333 München (DE)
(72) Erfinder: Ette, Bernd, D-10119 Berlin (DE); Hochgraef, Holger, D-16845 Ganzer (DE)

(56) Entgegenhaltungen:
- US-A- 4 945 443
- PATENT ABSTRACTS OF JAPAN vol. 014 no. 189 (P-1037), 17.April 1990 & JP-A-02 035506 (MITSUBISHI ELECTRIC CORP) 6.Februar 1990
- PATENT ABSTRACTS OF JAPAN vol. 012 no. 317 (P-750), 29.August 1988 & JP-A-63 083803 (AMADA CO LTD) 14.April 1988

## Beschreibung

Die Erfindung betrifft einen elektronischen Auslöser für einen Leistungsschalter mit einem Mikroprozessor und Schaltungsteilen zur Steuerung durch den Mikroprozessor zu verarbeitender Parameter, insbesondere Auslösestrom bei Überlast und zugehörige Verzögerungszeit, wobei die Schaltungsteile mit Einstellvorrichtungen für die Parameter zusammenwirken und die Einstellvorrichtungen an einer Bedienungsfront des Auslösers angeordnet sind.

Ein elektronischer Auslöser dieser Art ist aus der US-A-4 945 443 und z. B. durch die DE-C-31 53 749 jeweils bekannt geworden. Entsprechend der Vielfalt der Schutzfunktionen, die ein elektronischer Auslöser ausüben kann, wird eine Vielzahl von Einstellvorrichtungen benötigt. Abgesehen von der Schwierigkeit, die Einstellvorrichtungen für den Benutzer übersichtlich und gut zugänglich anzuordnen, erfordert auch die Verknüpfung der Einstellvorrichtungen mit den elektronischen Baugruppen des Auslösers einen nicht unbeträchtlichen Aufwand. Der Erfindung liegt in diesem Zusammenhang die Aufgabe zugrunde, die Einstellung der Parameter eines elektronischen Auslösers für den Benutzer erheblich zu vereinfachen.

Gemäß der Erfindung wird diese Aufgabe dadurch gelöst, daß die Einstellvorrichtungen eine gemeinsame Kontaktvorrichtung zur Verbindung mit einer Chipkarte aufweisen, wobei die in einem Speicherbaustein der Chipkarte gespeicherten Parameter bei der Verbindung der Chipkarte mit der Kontaktvorrichtung auf die Schaltungsanordnungen übertragbar sind und daß die Einstellvorrichtungen dem Mikroprozessor in dem Auslöser gespeicherte minimale Einstellwerte der Parameter zuführen, solange die Chipkarte mit der Kontaktvorrichtung nicht in Eingriff steht.

Durch die Gestaltung eines elektronischen Auslösers nach der Erfindung entfallen die bisher benötigten Einstellorgane, wie Kodierschalter, Potentiometer und ähnliche Bauelemente. Vielmehr genügt es, die Chipkarte mit dem Auslöser in Verbindung zu bringen, um sämtliche gewünschten Einstellungen fehlerfrei zu veranlassen. Die Programmierung der Chipkarte ihrerseits kann z. B. vorbereitend vom Hersteller des mit dem elektronischen Auslöser ausgerüsteten Leistungsschalters erfolgen oder durch den Benutzer mittels eines hierfür vorgesehenen Programmiergerätes. Eine solche Programmierung kann insbesondere unter Verwendung eines Bildschirmes und einer üblichen Tastatur erfolgen. Dies ist einfacher als die Handhabung kleiner Kodierschalter und Potentiometer.

Da die Chipkarte mit der Kontaktvorrichtung des elektronischen Auslösers lösbar in Verbindung steht, kann ein Leistungsschalter im Prinzip auch ohne Chipkarte in Betrieb genommen werden. Durch die nach der Erfindung vorgesehenen Zuführung minimaler Einstellwerte wird eine Gefährdung der mit dem zugehörigen Leistungsschalter ausgerüsteten Anlage verhindert.

Es ist bekannt, Chipkarten als Zugangssicherung in Gebäuden oder als elektronisches Geldguthaben, z.B. zur Bezahlung von Telefongesprächen an öffentlichen Sprechstellen zu benutzen. Darüber hinaus ist es bekannt, daß sich Chipkarten auch als Datenträger für industrielle Steuerungen eignen (Patent Abstracts of Japan, JP 2035506 und JP 63083803). Zur Einstellung elektronischer Auslöser von elektrischen Leistungsschaltern wurden Chipkarten bisher nicht eingesetzt.

Die Kontaktvorrichtung für die Herstellung elektrischer Verbindungen mit Kontaktflächen des Speicherbausteines der Chipkarte kann in einer etwa parallel zur Bedienungsfront des Auslösers ausgerichteten Lage angeordnet sein. Diese Anordnung hat gegenüber der beispielsweise bei Telefonkarten üblichen Benutzungsweise mit schubladenartig einschiebbarer Chipkarte den Vorteil, daß die Chipkarte stets vollständig sichtbar ist und daher die Funktion eines Typenschildes bzw. einer Merktafel erfüllen kann. Ferner kann die von der Chipkarte verdeckte Fläche als Träger der erwähnten minimalen Einstellwerte benutzt werden.

Die Sicherheit in größeren elektrischen Anlagen gebietet es, daß die Einstellung der elektronischen Auslöser von Leistungsschaltern nur durch berechtigte Personen vorgenommen und geändert werden kann. Hierzu ist es bei bisher üblichen Auslösern üblich, eine plombierbare Abdeckung der Einstellvorrichtungen vorzusehen. Nach einer Weiterbildung der Erfindung können stattdessen an der Bedienungsfront des Auslösers eine Tastatur zur Eingabe von Authentizitätsmerkmalen des Benutzer der Chipkarte angeordnet sein, wobei die Übergabe in der Chipkarte gespeicherter Parameter an den Mikroprozessor erst nach erfolgreicher Authentifizierung erfolgen kann.

Nach einer Weiterbildung der Erfindung kann der Speicherbaustein der Chipkarte als Schreib-Lese-Speicher ausgebildet sein und charakteristische Daten einer Auslösung des Leistungsschalters, wie Zeitpunkt, Höhe des Stromes und betroffene Phase des Netzes, können in dem Speicherbaustein protokolliert sein. Hiermit ist auf einfache Weise ein Hilfsmittel für die Fehlersuche geschaffen. Das Ablesen des Inhaltes des Speicherbausteins kann z. B. mittels des schon erwähnten Programmiergerätes erfolgen oder der mittels eines nur zum Lesen bestimmten Auswertungsgerätes.

Die Erfindung wird im folgenden anhand des in den Figuren dargestellten Ausführungsbeispieles näher erläutert.

Die Figur 1 zeigt eine schematische Frontansicht eines Niederspannungs-Leistungsschalters mit einem elektronischen Auslöser.

Die Figur 2 zeigt ein vereinfachtes Blockschaltbild des elektronischen Auslösers gemäß der Figur 1.

Die Figuren 3 und 4 sind Ansichten unterschiedlicher Ausführungsformen von Chipkarten.

In der Figur 5 ist ein Ausschnitt einer Chipkarte mit einem Speicherbaustein und dessen Kontaktflächen gezeigt.

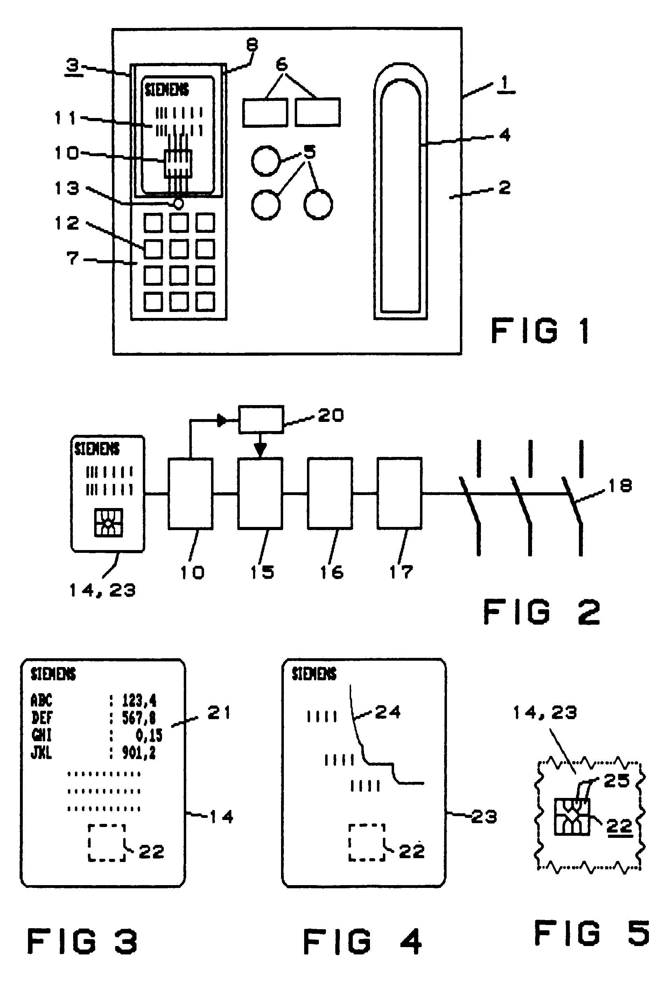

Der Leistungsschalter 1 gemäß der Figur 1 besitzt eine Bedienungsfront 2, an der alle benötigten Bedienungsorgane angeordnet sind. Im linken Teil der Bedienungsfront 2 befindet sich ein elektronischer Auslöser 3, während rechts ein Bedienungshandgriff 4 zum Spannen eines Federspeichers und in der Mitte Bedienungsorgane 5 und Anzeigeorgane 6 angeordnet sind.

Der elektronische Auslöser 3 besitzt eine eigene Bedienungsfront 7, deren oberer Teil eine Haltevorrichtung 8 für eine Chipkarte sowie eine Kontaktvorrichtung 10 und ein Beschriftungsfeld 11 aufweist. Die Kontaktvorrichtung 10 ist den Kontaktflächen der Chipkarte angepaßt, während das Beschriftungsfeld 11 gleichfalls etwa dem Format einer Chipkarte entspricht und durch diese überdeckt wird, wenn sie in die Haltevorrichtung 8 eingesteckt und hierdurch mit der Kontaktvorrichtung 10 in Verbindung gebracht wird. Unterhalb der Kontaktvorrichtung 10 und des Beschriftungsfeldes 11 weist die Bedienungsfront 7 des elektronischen Auslösers 3 ein Tastenfeld 12 auf, das etwa entsprechend dem Nummerntastenfeld eines Fernsprechers ausgestaltet sein kann. Zwischen dem Tastenfeld 12 und der Kontaktvorrichtung 10 befindet sich eine Anzeigeleuchte 13.

Das schematische Blockschaltbild gemäß der Figur 2 zeigt, daß eine mit der Kontaktvorrichtung 10 in Verbindung gebrachte Chipkarte 14 elektronische Einstellvorrichtungen 15 betätigt, durch die einem Mikroprozessor 16 die gewünschten Auslöseparameter zugeführt werden. Der Mikroprozessor 16 steuert eine Antriebsmechanik 17 für Schaltkontakte 18 eines Leistungsschalters.

Ein Beispiel für eine Chipkarte zeigt die Figur 3. Diese ist mit Parametern und zugehörigen Einstellwerten in der Gestalt einer Tabelle 21 beschriftet. Im unteren Bereich befindet sich der im Material der Chipkarte 14 eingebettete Speicherbaustein 2.

Eine andere Form einer Chipkarte zeigt die Figur 4. Diese Chipkarte 23 ist mit einer Darstellung einer Auslösekennlinie 24 versehen, wie dies auch für die Bedienungsfront elektronischer Auslöser bekannt ist. Die Zahlenwerte für die charakteristischen Parameter der Auslösekennlinie 24 sind neben dieser angegeben.

Der Speicherbaustein 22 ist in der Chipkarte 14 bzw. 23 in der Weise eingebettet, daß seine Kontaktflächen 25 (Figur 5) an der Rückseite der Chipkarte 14 bzw. 23 liegen, die beim Einstecken in die Haltevorrichtung 8 (Figur 1) der Kontaktvorrichtung 10 zugewandt ist.

Befindet sich die Chipkarte 14 bzw. 23 nicht im Eingriff mit der Kontaktvorrichtung 10 (Figur 2) so werden in einem Speicher 20 des elektronischen Auslösers gespeicherte minimale Parameter wirksam. Der Speicher 20 beaufschlagt die Einstellvorrichtung 11 stets dann, wenn die Kontaktvorrichtung 10 nicht mit einer Chipkarte 14 bzw. 23 belegt ist.

## Patentansprüche

1. Elektronischer Auslöser (3) für einen Leistungsschalter mit einem Mikroprozessor (15) und Schaltungsteilen zur Steuerung durch den Mikroprozessor (15) zu verarbeitender Parameter, insbesondere Auslösestrom bei Überlast und zugehörige Verzögerungszeit, wobei die Schaltungsteile mit Einstellvorrichtungen (11) für die Parameter zusammenwirken und die Einstellvorrichtungen (11) an einer Bedienungsfront (7) des Auslösers (3) angeordnet sind,
**dadurch gekennzeichnet,**
daß die Einstellvorrichtungen (11) eine gemeinsame Kontaktvorrichtung (10) zur Verbindung mit einer Chipkarte (14) aufweisen, wobei die in einem Speicherbaustein (22) der Chipkarte (14) gespeicherten Parameter bei der Verbindung der Chipkarte (14, 23) mit der Kontaktvorrichtung (10) auf den Mikroprozessor (15) übertragbar sind und daß die Einstellvorrichtungen (11) dem Mikroprozessor (15) in dem Auslöser (3) gespeicherte minimale Einstellwerte der Parameter zuführen, solange die Chipkarte (14, 23) mit der Kontaktvorrichtung (10) nicht in Eingriff steht.

2. Elektronischer Auslöser nach Anspruch 1,
**dadurch gekennzeichnet,**
daß die Kontaktvorrichtung (10) für die Herstellung elektrischer Verbindungen mit Kontaktflächen (25) des Speicherbausteines (22) der Chipkarte (14, 23) in einer etwa parallel zur Bedienungsfront (7) des Auslösers (3) ausgerichteten Lage eingerichtet ist.

3. Elektronischer Auslöser nach Anspruch 1 oder 2,
**dadurch gekennzeichnet,**
daß an der Bedienungsfront (7) des Auslösers (3) eine Tastatur (12) zur Eingabe von Authentizitätsmerkmalen des Benutzers der Chipkarte (14, 23) angeordnet ist und daß die Übergabe in der Chipkarte (14, 23) gespeicherter Parameter an den Mikroprozessor (15) erst nach erfolgreicher Authentifizierung erfolgt.

4. Elektronischer Auslöser nach einem der vorangehenden Ansprüche,
**dadurch gekennzeichnet,** daß der Speicherbaustein (22) der Chipkarte (14, 23) als Schreib-Lese-Speicher ausgebildet ist und daß charakteristische Daten einer Auslösung des Leistungsschalters, wie Zeitpunkt, Höhe des Stromes und betroffene Phase des Netzes, in dem Speicherbaustein (22) protokollierbar sind.

## Claims

1. Electronic trip device (3) for a circuit breaker having a microprocessor (15) and circuit components for controlling parameters to be processed by the microprocessor (15), in particular trip current in the case of overloading, and associated delay time, the circuit components interacting with setting devices (11) for the parameters and the setting devices (11) being arranged on a control panel (7) of the trip device (3), characterized in that the setting devices (11) have a common contact device (10) for connection to a chip card (14), it being possible to transmit the parameters stored in a memory module (22) of the chip card (14) to the microprocessor (15) when the chip card (14, 23) is connected to the contact device (10), and in that the setting devices (11) feed to the microprocessor (15) minimum setting values of the parameters which are stored in the trip device (3) as long as the chip card (14, 23) is not in engagement with the contact device (10).

2. Electronic trip device according to Claim 1, characterized in that the contact device (10) for making electrical connections to contact faces (25) of the memory module (22) of the chip card (14, 23) is set up in a position aligned approximately parallel to the control panel (7) of the trip device (3).

3. Electronic trip device according to Claim 1 or 2, characterized in that a keypad (12) for inputting authenticity features of the user of the chip card (14, 23) is arranged on the control panel (7) of the trip device (3), and in that the parameters stored in the chip card (14, 23) are not transferred to the microprocessor (15) until successful authentification has taken place.

4. Electronic trip device according to one of the preceding claims, characterized in that the memory module (22) of the chip card (14, 23) is designed as a read/write memory, and in that characteristic data for the tripping of the circuit breaker, such as time, magnitude of the current and respective phase of the power system can be logged in the memory module (22).

## Revendications

1. Déclencheur (3) électronique pour un disjoncteur, comportant un microprocesseur (15) et des pièces de circuit pour commander des paramètres à traiter par le microprocesseur (15), notamment le courant de déclenchement en cas de surcharge et une durée de retard associée, les pièces de circuit coopérant avec des dispositifs (11) de réglage des paramètres et les dispositifs (11) de réglage étant montés sur une face (7) d'utilisation du déclencheur,
caractérisé en ce que
les dispositifs (11) de réglage comportent un dispositif (10) de contact commun pour la liaison à une carte (14) à puce, les paramètres enregistrés dans un élément (22) de mémoire de la carte (14) puce pouvant être transmis, lors de la liaison de la carte (14, 23) à puce au dispositif (10) de contact, au microprocesseur (15), et en ce que le dispositif (11) de réglage envoie au microprocesseur (15) des valeurs de réglage minimales enregistrées dans le déclencheur, tant que la carte (14, 23) à puce n'est pas en prise avec le dispositif (10) de contact.

2. Déclencheur électronique suivant la revendication 1,
caractérisé en ce que
le dispositif (10) de contact est, pour la production de liaison électrique avec les surfaces (25) de contact de l'élément (22) de mémoire de la carte (14, 23) à puce, monté en une position dirigée à peu près parallèlement à la face (7) d'utilisation du déclencheur.

3. Déclencheur électronique suivant la revendication 1 ou 2,
caractérisé en ce que
il est monté sur la face (7) d'utilisation du déclencheur (3) un clavier (12) pour entrer des caractéristiques d'authenticité de l'utilisateur de la carte (14, 23) à puce et en ce que la transmission au microprocesseur (15) de paramètres enregistrés dans la carte (14, 23) à puce ne s'effectue qu'une fois que l'authentification a été effectuée.

4. Déclencheur électronique suivant l'une des revendications précédentes,
caractérisé en ce que
l'élément (22) de mémoire de la carte (14, 23) à puce est réalisé en mémoire d'écriture-lecture et en ce que l'on peut établir dans l'élément (22) de mémoire des listes de données caractéristiques d'un déclenchement du disjoncteur comme l'instant, le niveau du courant et la phase du réseau concerné.
